# EUROPEAN PATENT APPLICATION

(11) **EP 4 574 429 A1**
(43) Date of publication of application: **25.06.2025**
(21) Application number: 24220656.3
(22) Date of filing: 17.12.2024
(51) Int. Cl.: B33Y 80/00, H02K 9/193, H02K 5/20, F28D 15/00, F28D 21/00, F28F 27/00, H02K 5/18, H02K 7/14, F28D 7/00, G05D 7/01, H02K 9/22, H02K 11/33

(54) **AN ELECTRIC PROPULSION UNIT**

(30) Priority: 22.12.2023 GB 202319951
(71) Applicant: Evolito Ltd, Bicester, Oxford Oxfordshire OX25 2PA (GB)
(72) Inventor: BURNS, Chris, Oxford, OX25 2PA (GB)
(74) Representative: Marks & Clerk LLP

(57) **Abstract**

We describe an electric propulsion unit (EPU) that comprises an axial flux motor, a transmission unit, a controller (for controlling the axial flux motor) and a heat exchanger. The heat exchanger comprises first and second heat exchange circuits flooded with cooling fluid, the circuits are coupled between respective first and second inlets and second outlets. Each of the axial flux motor and controller respectively comprise housings comprising first and second cooling circuits between respective first and second inlets and outlets. The axial flux motor and controller are arranged to be mechanically connected together so as to provide a first cooling flow path through each of the first cooling circuits of the axial flux motor and controller and a second cooling flow path through each of the second cooling circuits of the axial flux motor and controller. The first cooling flow path is fluidly connected to the first heat exchanger circuit and the second cooling flow path is fluidly connected to the second heat exchanger circuit.

## Description

### FIELD OF INVENTION

The present invention relates to cooling of an electric propulsion unit (EPU) for vertical take off and landing (VTOL) applications.

### BACKGROUND OF THE INVENTION

In modern electric motors, efficient cooling is essential to maintaining optimal performance and prevent overheating. Dual channel cooling is a common method used to achieve this goal and involves the circulation of two separate coolant channels through the motor and its subsystems.

A first coolant channel typically circulates through the stator and less often rotor windings, as well as rotor bearings and other critical components of the motor. This channel is responsible for dissipating heat generated during operation, ensuring the motor operates within safe temperature limits.

The second coolant channel is often used to cool ancillary components of the motor, such as the motor controller and power electronics. By cooling these subsystems, dual channel cooling can improve their efficiency and extend their lifespan.

Overall, dual channel cooling is an effective way to manage heat in modern electric motors and their subsystems, improving their reliability and performance.

By separating the cooling system into two channels, engineers can optimize cooling performance of each channel independently, resulting in improved efficiency, longer component life and greater reliability. Dual-channel cooling additionally enables more precise temperature control, which is essential for modern power dense electric machines that rely on complex electronic controls to manage performance.

Dual channel cooling has been applied to IC engine traction and dynamo systems particularly for marine, locomotive and power generation applications where machines are often operated for long periods at their highest performance. Dual cooling has also been successively developed over many years for radial flux motors and generators that have until the early 2000's been the dominant traction and generator technology.

In contrast cooling strategies for axial flux machines are still developing because their advent in commercial applications is still relatively new and their power densities enable axial flux machines to be integrated into new and complex environments not previously attainable with radial flux machines.

An example of a dual channel cooling arrangement is taught by US20130049495A1 wherein cooling water flows circumferentially around the stator jacket cooling the stator and also cools a planar stator wall region on which are mounted controller electronics.

A separated dual cooling channel is taught in EP4123889A1 for a wind turbine in which two separate cooling channels with coolants 1 and 2 are fed in to a three channel heat exchanger system to transfer heat to a third coolant. All three coolants are independent such that if cooling channel 1 or 2 fails, the other can continue to operate with sufficient efficacy of heat removal to maintain machine operation. EP'889 teaches the increasing complexity of systems and number of separate heat generating sub-systems i.e., their own housings, physical mounting systems and coolant traces all having their own control / temperature requirements demanding ever increasing capacity of heat removal units, such that the potential for failure of the heat removal unit i.e., heat-exchanger / radiator itself, increases.

A feature of axial flux machines is their high-power density and short axial length format which lends itself to mechanical integration with subsystems that were previously distinctly separated and compartmentalised, e.g., inverter, converter, controller, gearbox, clutch, motor(s) and associated stator and rotor, which because of axial flux motor topologies, can now be mechanically integrated, to build extraordinarily power dense EPUs.

Such high levels of integration of heat dissipating subsystems built around axial flux machines, leads to similar thermal challenges that are encountered for increasing silicon device integration which brought about new cooling strategies necessary to ensure efficient and fault tolerant cooling of the whole.

Such high levels of machine integration of the present invention brings a substantial advantage in power density, along with the usual requirement for fault tolerance in subsystems and their cooling. Though each subsystem may relinquish some accessibility, this comes with known advantages of monolithic integrated systems, i.e., shorter connection paths, greater reliability and protection of connections and overall improvement in reliability through a whole life cycle.

It has been realised that these new power dense integrated EPU's built around axial flux machine topologies need a new approach to cooling providing high reliability and fault tolerant characteristics particularly where such systems are destined for aerospace applications.

### SUMMARY OF INVENTION

The present invention is defined by the independent claims, appended hereto. Further advantageous embodiments are defined by the dependent claims, also appended hereto.

We will describe an Electric Propulsion Unit (EPU), comprising: an axial flux motor having a stator and a rotor, the rotor being coupled to an output shaft; a transmission unit coupled to the output shaft of the axial flux motor and having an output shaft for driving a mechanical load ; a controller for controlling the axial flux motor; and a heat exchanger comprising: first and second inlets and first and second outlets; first and second separable heat exchange circuits, the first heat exchange circuit being coupled between the first inlet and first outlet of the heat exchanger, and the second heat exchange circuit being coupled between the second inlet and second outlet, each of the heat exchange circuits being flooded with a respective cooling fluid, wherein the axial flux motor and controller respectively comprise housings comprising: first and second inlets and first and second outlets; first and second isolated cooling circuits, the respective first cooling circuit being coupled between the respective first inlet and respective first outlet, and the respective second cooling circuit being coupled between the respective second inlet and respective second outlet, wherein the axial flux motor and controller are arranged to be mechanically connected together so as to provide: a first cooling flow path through each of the first cooling circuits of the axial flux motor and controller; and a second cooling flow path through each of the second cooling circuits of the axial flux motor and controller, and wherein the first cooling flow path is fluidly connected to the first heat exchanger circuit and the second cooling flow path is fluidly connected to the second heat exchanger circuit.

Such an arrangement advantageously provides a fault tolerant cooling system for an EPU since the first and second cooling circuits may be operated independently of each other, such that each of the modules within the EPU comprising the first and second cooling flow paths may be cooled even in the event that one of the cooling circuits becomes non-functional or non-optimal in its performance. Furthermore, the arrangement of the mechanical connection between the axial flux machine to connect the cooling circuits enables an EPU to be provided with a reduced footprint and a more rigid design.

The EPU may comprise a first pump in the first flow path, the first pump for pumping the first cooling fluid through the first flow path; and a second pump in the second flow path, the second pump for pumping the second cooling fluid through the second flow path. The first and second pumps may comprise a single pump having respective first and second impellors driving driven by a common shaft.

Each of the first and second cooling circuits may comprise one or more respective one-way valves such that the cooling fluid in each circuit can only flow in a respective one direction. One or more of the respective one-way valves may be located within one or more of the heat-exchanger, axial flux motor and controller cooling circuits.

The heat exchanger may comprise a controllable flow diverter between the first and second heat exchanger circuits, the controllable flow diverter being configurable between a first position and a second position, wherein in the first position the flow diverter blocks flow of the cooling fluid between the first and second heat exchanger circuits, and in the second position the flow diverter allows at least a portion of the cooling fluid to flow between the first and second heat exchanger circuits.

One or both of the axial flux machine and controller may comprise a controllable flow diverter between respective inlets and outlets of one or both of the respective first and second cooling circuits, the controllable flow diverters being configurable between a first position and a second position, wherein in the first position the respective flow diverter blocks flow of the cooling fluid between the respective first and second cooling circuits, and in the second position the flow diverter allows at least a portion of the cooling fluid to flow between the respective first and second cooling circuits.

The controller and transmission unit may be co-located and mounted to one-another such that a thermal path between the controller and transmission unit is provided and such that heat generated by the transmission unit passes into the housing of the controller and into one or both of the first and second cooling circuits of the controller.

The transmission unit may be located above the controller housing.

One or more portions of the first and second cooling circuits may be co-located within the respective housings to permit thermal coupling between the first and second cooling circuits.

One or more of the respective housings may be provided with one or more portions of heat exchange elements, the one or more portions of heat exchange elements being configured to provide a radiative thermal path for heat within the respective housing. One or more portions of heat exchange elements may be located in a wall of the respective housing adjacent another of the housings. The one or more portions of heat exchange elements may be located in an external wall of the respective housing.

The EPU may comprise an expansion chamber located in or between a respective housing within the EPU, the expansion chamber being configured to receive the first and second cooling channels within the first and second cooling circuits. The expansion chamber may comprise a diaphragm separating the first and second cooling circuits. The diaphragm may be formed of a flexible and elastic material. The diaphragm material may comprise a metallic filler configured to have a variable resistance that is proportional to a deflection of the diaphragm. The expansion chamber may comprise a positive displacement pump.

The first cooling flow path in a respective housing may be fluidly connected to the first heat exchanger circuit via a first tubing and the second cooling flow path in the respective housing may be fluidly connected to the second heat exchanger circuit via a second tubing.

The heat exchanger may be mechanically mounted to one or either of the axial flux motor or controller housing. Alternatively, the heat exchanger may be located remote from the axial flux motor, controller housing and transmission unit.

The cooling fluid may be a dielectric cooling fluid. The cooling fluid may be a lubricant.

### BRIEF DESCRIPTION OF DRAWINGS

Figure 1 a schematic diagram of an integrated EPU of the present invention;
Figure 2 a schematic drawing of a dual channel coolant system of the present invention;
Figure 3 a schematic diagram of a dual coolant system of the present invention with a pressure difference accommodation and expansion diaphragms and volume regions;
Figure 4 a schematic diagram of a dual coolant system of the present invention;
Figure 5 is an alternative arrangement in which the motor controller is not provided with first and second cooling channels;

### DETAILED DESCRIPTION OF THE PREFERRED EMBODIMENTS

The present invention will be illustrated by example embodiments which provide exemplary features which may be rearranged, combined and separated without departure from the disclosed systems and methods.

In brief, the present invention provides an electric propulsion unit (EPU) that comprises an axial flux motor having a stator and a rotor, a transmission unit, a controller (for controlling the axial flux motor) and a heat exchanger. The rotor is coupled to an output shaft, and the transmission unit is coupled to the output shaft of the axial flux motor and has an output shaft for driving a mechanical load such as a propeller. The heat exchanger comprises first and second inlets and first and second outlets, and first and second separable heat exchange circuits. The first heat exchange circuit is coupled between the first inlet and first outlet of the heat exchanger, and the second heat exchange circuit is coupled between the second inlet and second outlet, each of the heat exchange circuits being flooded with a respective cooling fluid.

Each of the axial flux motor and controller respectively comprise housings comprising first and second inlets and first and second outlets and first and second isolated cooling circuits. The respective first cooling circuit are coupled between the respective first inlet and respective first outlet, and the respective second cooling circuit is coupled between the respective second inlet and respective second outlet. The axial flux motor and controller are arranged to be mechanically connected together so as to provide a first cooling flow path through each of the first cooling circuits of the axial flux motor and controller and a second cooling flow path through each of the second cooling circuits of the axial flux motor and controller. The first cooling flow path is fluidly connected to the first heat exchanger circuit and the second cooling flow path is fluidly connected to the second heat exchanger circuit.

Such an arrangement advantageously provides a fault tolerant cooling system for an EPU since the first and second cooling circuits may be operated independently of each other, such that each of the modules within the EPU comprising the first and second cooling flow paths may be cooled even in the event that one of the cooling circuits becomes non-functional or non-optimal in its performance. Furthermore, the arrangement of the mechanical connection between the axial flux machine to connect the cooling circuits enables an EPU to be provided with a reduced footprint and a more rigid design.

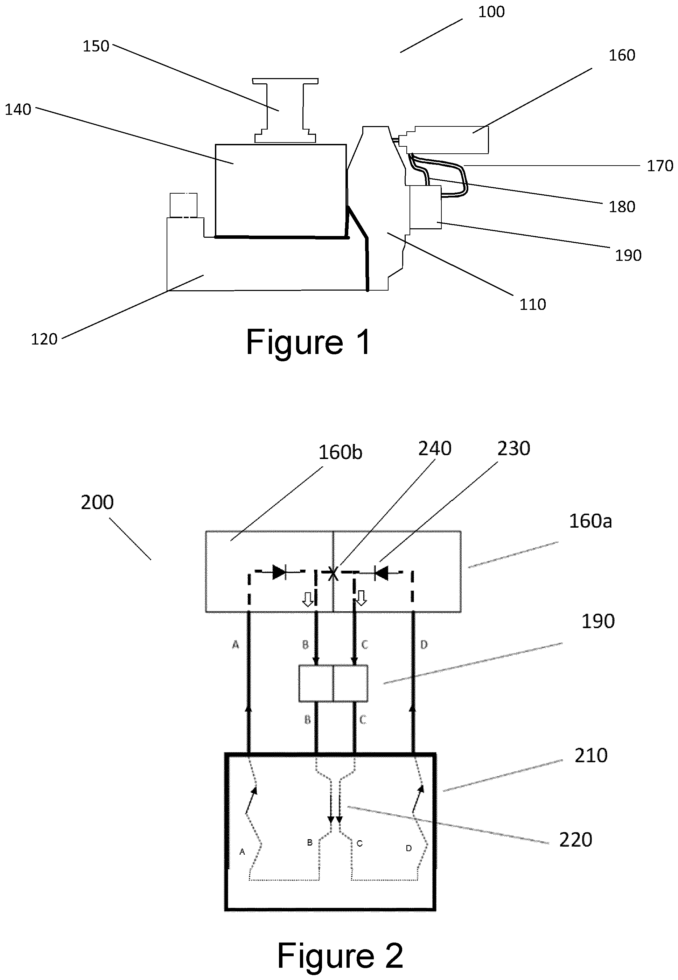

Figure 1 shows a line drawing of a VTOL EPU 100 of the present invention in which an axial flux motor 110 is integrated with inverter controller 120, transmission unit 140, and output shaft 150. Heat exchanger / radiator 160 contains two coolant paths in which dual separable coolant circuits 170 and 180 exchange heat with radiator fins which are air cooled by propeller / fan (not shown).

Coolant circuits 170 and 180 are pumped using a positive displacement pump 190 which has two separated impellor cavities driven by a single shaft and motor. Though in ultrahigh reliability systems twin positive displacement fluid pumps may be used providing redundancy of pumping better ensuring continuity of coolant flow.

Advantageously, apart from short links of connection coolant pipework from pump 190 to radiator 160, all coolant pathway flows lay within the respective housings of one or more of the axial flux motor 110 or inverter controller 120. In some arrangements the coolant pathways flow within the respective housings of one or both of the axial flux motor 110 and the inverter controller 120. Since the controller 120 is actively cooled using the cooling channels, and the transmission unit 140 may generally be run hotter than other components within the EPU, the transmission unit 140 to the controller may provide sufficient thermal transfer performance into the cooling circuit of the controller 120 to cool the transmission unit 140.

A difficulty found with integrated cooling systems where integration consists of joining coolant inlets and outlets of subsystems by pipework is that such pipework is prone to vibration and the potential of abrasion. Damage may also occur during maintenance or through accidental impact. Containing coolant flow paths within the various integrated subsystems as taught by the present invention helps maintain coolant integrity.

It will be seen in Figure 1 the diameter of axial flux machine 110 casing is approximately the same as the combined vertical height of the integrated housing for motor controller inverter 120, and transmission unit 140.

A significant benefit in rigidity and strength is derived from this integration of subsystem housings ensuring shafts and gearing operate at optimum performance in a single first assembly process which is not subject to variance during maintenance procedures through subsystem relative movement.

Though the integrated housing of the present invention is complex, it lends itself to additive manufacturing, lost wax style casting and similar near-net-shape manufacturing routes.

The integrated housing provides not only a protected fluid tight shield for coolant paths, to be described, but also its continuity of stiffness provides multiple mounting points to support flexibility of use. EPUs of the present invention may be installed in a variety of airframe structures which may be readily adapted to take advantage of the EPU housing's multiple mounting bosses.

With reference to Figure 2 an embodiment of the present invention is shown of two independent cooling paths 200.

The fluid schematic of Figure 2 shows air to fluid radiator (heat exchanger) 160a,b which is split into two coolant circuits AB and CD shown. More than two circuits are possible.

With reference to Figure 2, four coolant paths are shown A, B, C, D where A and B form a closed circuit and C and D form a closed circuit. Paths B and C pass from the air to fluid radiator (heat exchanger) 160a,b through pump 190. Pump 190 has a common shaft and provides two fluidly separate pump circuits. Paths B and C then pass into what amounts to a single EPU housing 210. Whilst schematically this is shown as a single EPU housing 210, this is shown for the sake of simplicity in this figure. In practice, EPU housing 210 is the arrangement of axial flux motor 110, inverter controller 120, and transmission unit 140 mounted together to form the EPU. Having traversed via separate paths B and C through the integrated EPU 100 subsystems and thereby absorbed heat energy from those same heat generating subsystems coolant fluid paths B,C become return paths A and D.

Paths A and D carry subsystem heated fluid on the return path to air to fluid radiator (heat exchanger) 160a,b maintaining split, independent cooling circuits.

Because coolant circuits AB, CD share a common, though separated pathway gathering heat energy from EPU 100 subsystems, there is potential and value in organising a region within the EPU housing 210, close to the most heat dissipating element, in which heat exchange between the two separated fluid circuits can occur. This is shown schematically in Figure 2 by paths in EPU housing 210 laying more closely together in region 220. Heat exchange between two close but separated cooling paths may be enhanced through passing the separated fluid paths through a common block of high heat conducting material such as copper or aluminium or through a more complex arrangement of finned tubes carrying one coolant passing through a fluid tight chamber with inlet and outlet carrying the second coolant fluid. Other methods of efficiently exchanging heat from one flowing fluid to another flowing fluid whilst maintaining them separate are possible.

It will be noted that in Figure 2, cooling fluid paths A and D are shown drawn close to the walls of EPU housing 210 and in practice there is advantage in taking this path and EPU housing 210 may be ribbed finned or otherwise made to improve its surface radiation, natural and forced convection heat dissipation capacity, thereby reducing heat load to be dissipated by radiator 160a,b. That is, coolant channels within the housings of one or more of the axial flux machine 110, controller 120, and transmission unit 140, may be finned or otherwise made to improve its surface radiation, natural and forced convection heat dissipation capacity, thereby reducing heat load to be dissipated by radiator 160a,b.

Though coolant paths A, B,C,D are as shown in Figure 2, there may be advantage in having flow valves (not shown) that for instance can bring flow paths A and B and C and D closer for a set period for instance when starting from cold, so that EPU components may heat to steady state faster. Having reached an optimum temperature flow valves (not shown) may return coolant flow paths to the normal route intended to dissipate heat to the outside environment.

In case of failure in one of the coolant circuits, there is advantage in passing hot fluid from an operational pumped circuit close to the failed, un-pumped coolant fluid, thereby removing heat energy.

Advantageously radiator 160a,b is mounted above all other components in the cooling circuits, such that in the event of failure of one circuit, convection cooling may still occur.

In such an instance there is advantage in ensuring no regions exist within the cooling circuits where hot fluid can accumulate, but rather hot fluid can always find a convection route towards radiator 160a,b.

A primary aim of the present invention is to enable two or more effective cooling circuits to operate independently from each other, such that a failure in one circuit, for instance a blockage, does not compromise or affect the other operational circuit.

Nevertheless it is a feature of the present invention that partial failures in one circuit, may be limited in loss of cooling impact by linking all or part of an operational cooling circuit to the 'failed' cooling circuit and thereby continue to cool EPU components.

With reference to Figure 2, diode one-way flow valves 230 ensure fluid in circuit AB and CD can only flow clockwise and anticlockwise respectively. Shut-off valve `X' 240 when in the closed position ensures circuit AB is independent of circuit CD.

If either circuit AB or CD is compromised, valve `X' 240 can be opened the operational circuit can pump coolant through the compromised circuit. Flow valves 230 prevent coolant flow from circulating in an unhelpful direction.

A similar system of flow valves and shut-off valves (not shown) can be placed at the entrance and exit of each heat contributing EPU element and activated to shut-off or redirect coolant flow as required.

Use of heat exchange elements including radiator heat exchangers, jointly or independently 'the part' to transfer heat between and from independent coolant circuits of the present invention provides at least the following benefits:
- Cross circuit heat exchange to equalise temperatures between independent cooling circuits. Heat exchange can occur in the heat exchanger radiator and / or via heat transfer between cooling channels in various EPU compartments, e.g., Power controller, inverter, motor, etc.
- The part can also transfer heat from an active loop into the inactive loop when the active loop needs to work at double power if one lane is non-operational. Active and inactive denoting if the elements on the associated coolant circuit are operational or not.
- The part can contain valves to change the two parallel loops into one series loop in case of pump failure or if there is a blockage in one of the parallel loops in either the air to fluid radiator (heat exchanger) or the additional split coolant circuit elements. To ensure fault tolerance, dual coolant circuits for an EPU embodiment, have intrinsic independence between the coolant loops.
- Series and parallel loops can be used to balance the pump load during different operating conditions including startup and air purge. Air purge is the process by which air is removed from a coolant circuit during for example, filling or top-up maintenance.

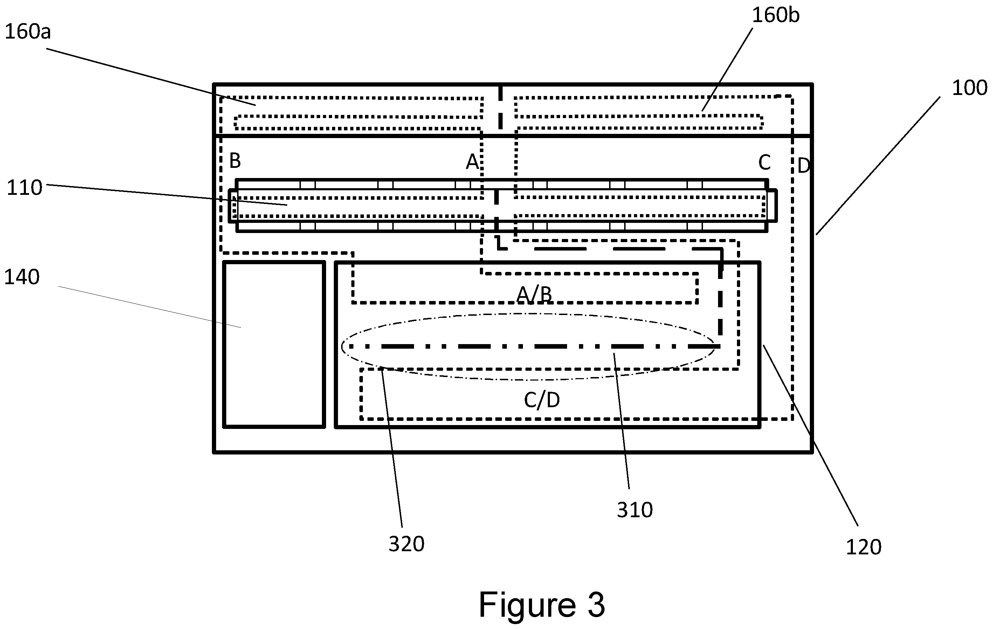

With reference to Figure 3, a flexible and elastic diaphragm 310 separating dual coolant circuits A/B and C/D may be placed within the EPU 100 arrangement in an expansion zone, which maybe within a subsystem as shown. The diaphragm 310 enables pressure difference adjustment / accommodation up to a limit or diaphragm 310 expansion zone 320 between the two coolant circuits. The internal pressure accommodation diaphragm may advantageously be made from a coolant resistant elastomer compounded with a metallic filler which provides a change of resistance in the surface plane of the membrane as the membrane flexes. Change in membrane resistance indicates change in pressure differentials between coolant circuits.

The flexible and elastic diaphragm 310 separating dual coolant circuits A/B, C/D, placed within the EPU housing and / or a subsystem coolant containment walls as described may advantageously provide a path for internal accommodation of coolant fluid from one of the cooling circuits in case of rupture during an over pressure event. Containment of coolant and retaining of some cooling capacity is preferable over discharge of coolant into the air.

The arrangement could house a mechanical gear or moving diaphragm (positive displacement pump) that would maintain flow in a path that has experienced a pump failure by taking energy from the path that is still operation.

Coolant paths of the present invention may be a mixture of pipe contained and subsystem housing contained, i.e., coolant fluid is in direct contact with subsystem components.

Alternatively depending on coolant fluid and its ability to act as a lubricant, a coolant fluid which can also act as a lubricant and conversely a lubricant which can also act as a cooling fluid may be used in all EPU sub-systems as a direct contact coolant / lubricant.

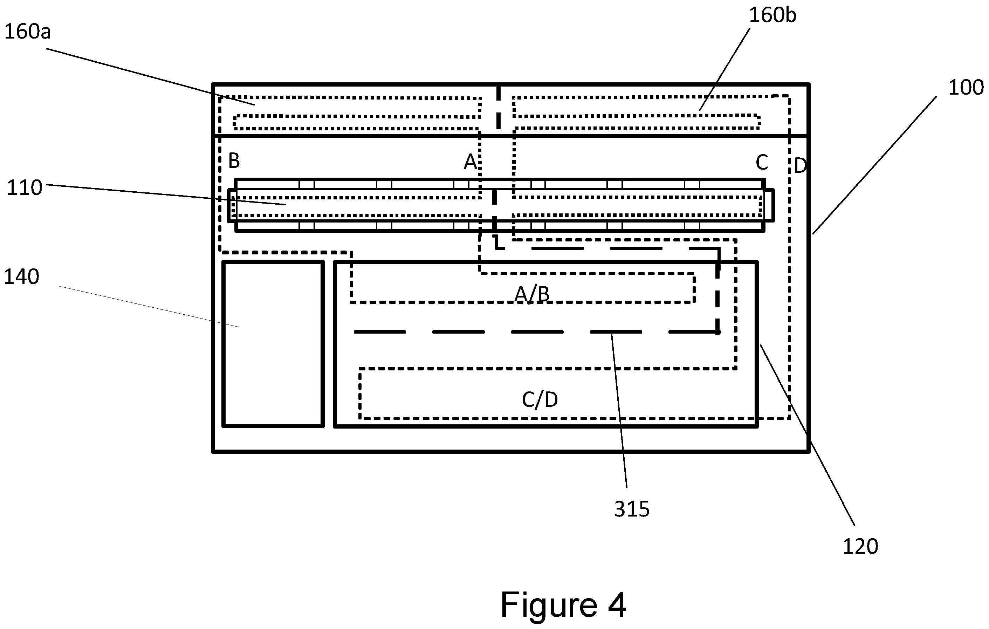

With reference to Figure 4, EPU systems which use direct contact fluid coolant / lubricant may have separated cooling channels within the subsystem structures within the EPU 100 housing. The exterior i.e. surrounding box is a schematic representation of EPU 100 housing. Heat-exchanger / radiator 160 is shown separated by a thick dashed line into two channels 160a and 160b, each channel running closely with the other and both channels having high surface area to exchange heat energy with the air.

With reference to Figure 4, coolant channel AB (thin dashed line) is independent of coolant channel CD (thin dashed line) each coolant channel nevertheless cooling each exemplar EPU 100 subsystem comprising e.g., motor 110, and controller 120 shown schematically in Figure 4. Each subsystem being divided internally into two separate cooling channels which are shown in Figure 4 by thick dashed lines.

Cooling channels AB and CD traverse subsystems with no mixing of coolant / lubricant fluid from either channel.

For some subsystems, it may not be possible to divide into separate cooling channels so that coolant from each fluid path cools the subsystem heat generating components in a similar way. However, separate cooling channels can be made equally effective in removing heat from an unevenly divided subsystems, by structuring subsystem coolant separation walls e.g., using fins, ribbed surfaces, heat pipes. Advantageously, structuring coolant separation walls enables heat to be equally distributed between the two cooling channels.

With reference to Figure 3, in instances where coolant fluid is not also a lubricant, coolant may be used in direct contact mode for subsystems that only require cooling, e.g., motor 110 and motor controller 120, in which coolant fluid directly contacts e.g., stator coils and busbar traces in motor 110 and electronic devices, capacitors and similar heat dissipating elements in motor controller 120.

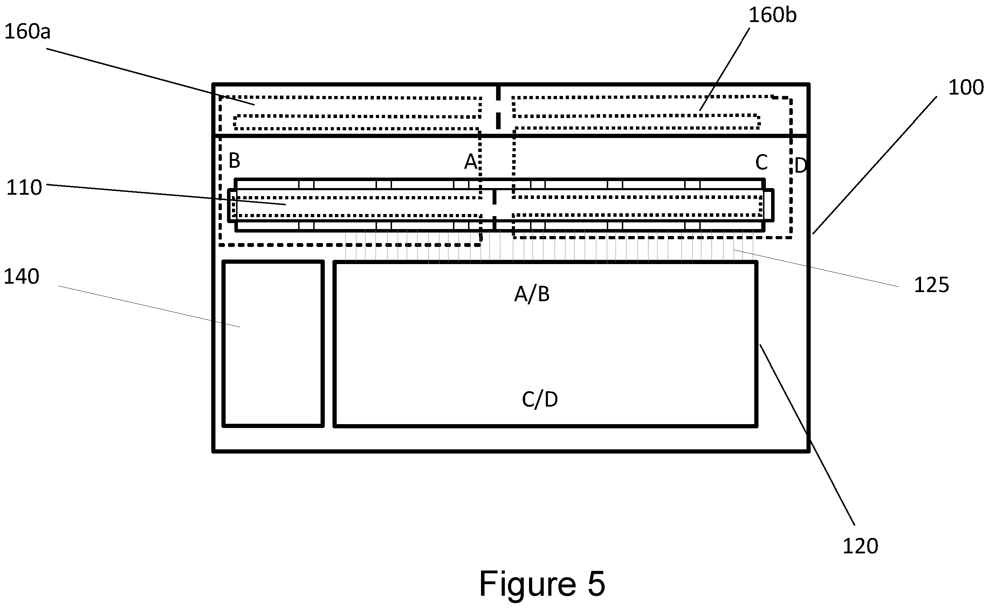

Figure 5 shows an example arrangement in which one or more of the components in the EPU are not provided with first or second cooling channels as part of the first and second cooling circuits. Figure 5 shows an arrangement in which the motor controller 120 is not provided with first and second cooling channels.

In such arrangements dividing walls between various components with the EPU may be provided with finned or ribbed structures 125, that increase its surface radiation to improve thermal transfer to components that are actively cooled using the first and second cooling channels in the first and second cooling circuits.

No doubt many other effective alternatives will occur to the skilled person. It will be understood that the invention is not limited to the described embodiments and encompasses modifications apparent to those skilled in the art lying within the scope of the claims appended hereto.

## Claims

1. An Electric Propulsion Unit (EPU), comprising:
an axial flux motor having a stator and a rotor, the rotor being coupled to an output shaft;
a transmission unit coupled to the output shaft of the axial flux motor and having an output shaft for driving a mechanical load;
a controller for controlling the axial flux motor; and
a heat exchanger comprising:
first and second inlets and first and second outlets;
first and second separable heat exchange circuits, the first heat exchange circuit being coupled between the first inlet and first outlet of the heat exchanger, and the second heat exchange circuit being coupled between the second inlet and second outlet, each of the heat exchange circuits being flooded with a respective cooling fluid,
wherein the axial flux motor and controller respectively comprise housings comprising:
first and second inlets and first and second outlets;
first and second isolated cooling circuits, the respective first cooling circuit being coupled between the respective first inlet and respective first outlet, and the respective second cooling circuit being coupled between the respective second inlet and respective second outlet,
wherein the axial flux motor and controller are arranged to be mechanically connected together so as to provide:
a first cooling flow path through each of the first cooling circuits of the axial flux motor and controller; and
a second cooling flow path through each of the second cooling circuits of the axial flux motor and controller, and
wherein the first cooling flow path is fluidly connected to the first heat exchanger circuit and the second cooling flow path is fluidly connected to the second heat exchanger circuit.

2. An EPU according to claim 1, comprising:
a first pump in the first flow path, the first pump for pumping the first cooling fluid through the first flow path; and
a second pump in the second flow path, the second pump for pumping the second cooling fluid through the second flow path, optionally
wherein the first and second pumps comprise a single pump having respective first and second impellors driven by a common shaft.

3. An EPU according to claim 1 or 2, wherein each of the first and second cooling circuits comprises one or more respective one-way valves such that the cooling fluid in each circuit can only flow in a respective direction, optionally
wherein one or more of the respective one-way valves are located within one or more of the heat-exchanger, axial flux motor and controller cooling circuits.

4. An EPU according to any preceding claim, wherein the heat exchanger comprises a controllable flow diverter between the first and second heat exchanger circuits, the controllable flow diverter being configurable between a first position and a second position, wherein in the first position the flow diverter blocks flow of the cooling fluid between the first and second heat exchanger circuits, and in the second position the flow diverter allows at least a portion of the cooling fluid to flow between the first and second heat exchanger circuits.

5. An EPU according to any preceding claim, wherein one or both of the axial flux machine and controller comprise a controllable flow diverter between respective inlets and outlets of one or both of the respective first and second cooling circuits, the controllable flow diverters being configurable between a first position and a second position, wherein in the first position the respective flow diverter blocks flow of the cooling fluid between the respective first and second cooling circuits, and in the second position the flow diverter allows at least a portion of the cooling fluid to flow between the respective first and second cooling circuits.

6. An EPU according to any preceding claim, wherein the controller and transmission unit are co-located and mounted to one-another such that a thermal path between the controller and transmission unit is provided and such that heat generated by the transmission unit passes into the housing of the controller and into one or both of the first and second cooling circuits of the controller.

7. An EPU according to any preceding claim, wherein one or more portions of the first and second cooling circuits are co-located within the respective housings to permit thermal coupling between the first and second cooling circuits.

8. An EPU according to any preceding claim, wherein one or more of the respective housings is provided with one or more portions of heat exchange elements, the one or more portions of heat exchange elements being configured to provide a radiative thermal path for heat within the respective housing.

9. An EPU according to claim 8, wherein one or more portions of heat exchange elements are located in a wall of the respective housing adjacent another of the housings.

10. An EPU according to claim 8 or 9, wherein the one or more portions of heat exchange elements are located in an external wall of the respective housing.

11. An EPU according to any preceding claim, comprising an expansion chamber located in or between a respective housing within the EPU, the expansion chamber being configured to receive the first and second cooling channels within the first and second cooling circuits.

12. An EPU according to claim 11, wherein the expansion chamber comprises a diaphragm separating the first and second cooling circuits, optionally wherein the diaphragm is formed of a flexible and elastic material, optionally wherein the diaphragm material comprises a metallic filler configured to have a variable resistance that is proportional to a deflection of the diaphragm.

13. An EPU according to claim 11 or 12, wherein the expansion chamber comprises a positive displacement pump.

14. An EPU according to any preceding claim, wherein the first cooling flow path in a respective housing is fluidly connected to the first heat exchanger circuit via a first tubing and the second cooling flow path in the respective housing is fluidly connected to the second heat exchanger circuit via a second tubing.

15. An EPU according to claim 14, wherein the heat exchanger is mechanically mounted to one or either of the axial flux motor or controller housing, or
wherein the heat exchanger is located remote from the axial flux motor and controller housing.
